# EUROPEAN PATENT SPECIFICATION

(11) **EP 3 780 152 B1**
(45) Date of publication and mention of the grant of the patent: **29.11.2023**
(21) Application number: 19849306.6
(22) Date of filing: 29.05.2019
(51) Int. Cl.: H01M 50/204, H01M 50/55, H01M 50/552, H01M 50/567, H01M 50/502

(54) **CONNECTOR AND BATTERY PRODUCT**
VERBINDER UND BATTERIEPRODUKT
CONNECTEUR ET PRODUIT DE BATTERIE

(30) Priority: 15.08.2018 CN 201821316829 U
(43) Date of publication of application: 17.02.2021
(73) Proprietor: Contemporary Amperex Technology Co., Limited, Ningde, Fujian 352100 (CN)
(72) Inventor: LUO, Wenchao, Ningde, Fujian 352100 (CN)
(74) Representative: Ran, Handong
(86) International application number: PCT/CN2019/089056
(87) International publication number: WO 2020/034721

(56) References cited:
- EP-A1- 2 741 344
- CN-A- 103 812 077
- CN-A- 103 872 500
- CN-U- 208 507 805
- US-A1- 2015 255 898
- US-A1- 2017 179 662

## Description

### TECHNICAL FIELD

The present invention relates to the field of battery technology, in particular, a connector and a battery product.

### BACKGROUND

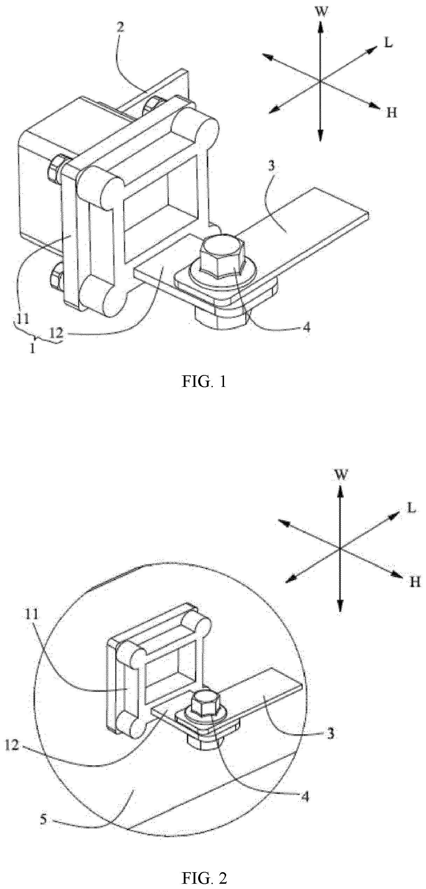

In the battery product, in order to realize the electrical connection between the inside and outside of the battery product (such as the battery pack), the battery product are usually provided with a first connecting piece 2 arranged outside a box 5, a second connecting piece 3 arranged inside the box 5, and a connector 1 mounted to the box 5 and connected with the first connecting piece 2 and the second connecting piece 3 through locking members 4 (such as bolts), as shown in Fig. 1 to Fig. 3.

The structure of a connecting terminal 12 of a traditional connector 1 is generally L-shaped, where one end of the connecting terminal 12 is supported on the mounting seat 11 and is located outside the box 5 so as to be connected with the first connecting piece 2, and the other end of the connecting terminal 12 extends out of the mounting seat 11 in a cantilever manner and is located inside the box 5 so as to be connected with the second connecting piece 3.

This way of configuration between the connecting terminal 12 and the mounting seat 11 makes the load resistance capacity of the other end of the connecting terminal 12 weak. Therefore, in the process that the connecting terminal 12 is fixedly connected to the second connecting piece 3 through a locking member 4, when the battery product is under the working condition of vibration with large amplitude and high frequency, as well as under the working conditions of impact and extrusion, etc., the connecting terminal 12 is prone to bending, deformation and even fracture due to stress concentration, thereby affect the safety performance of the battery product. In addition, because the other end of the connecting terminal 12 occupies a large space of the inside of the box 5, the connecting terminal 12 is easy to contact other electrically connected parts inside the box 5 during the use of the battery product, thus affecting the safety performance of the battery product.

US 2015/255898 A1 is directed to a connector. The connector includes a top cover, a connecting plate, and a base. The top cover includes a top cover body and a first arc member. A first end of the first arc member is arranged on a side surface of the top cover body. A removable thin plate is arranged inside the first arc member.

US 2017/179662 A1 discloses a battery connector used to electrically connect a button battery. The connector has an insulating housing and positive and negative terminals. The housing has a limiting space for receiving and fixing the battery.

EP 2741344 A1 discloses an electrical storage device (1) comprises a housing structure(50) having battery unit housing portions (53) each for housing a battery unit (70) and an attaching object(51), a plurality of connectors (10) attached to the attaching object (51) and conductive members (54) connecting between the connectors(10).

### SUMMARY

In view of the problems existing in the background art, an object of the present invention is to provide a connector and a battery product. A connecting terminal of the connector possesses strong load resistance capability, and when it is applied to the battery product, the connection strength between the connector and the battery product is ensured, and the safety performance of the battery product is improved.

In order to fulfill the above object, the present invention provides a connector, which is used in a battery product, the battery product includes a box, a first connecting piece arranged outside the box, a second connecting piece arranged inside the box and locking members. The connector includes a mounting seat and a connecting terminal fixed on the mounting seat. Where the connecting terminal includes: a first connecting part extending along a width direction; a second connecting part extending along the width direction and arranged to be spaced apart from the first connecting part along a height direction; and a first holding part extending along the height direction and connected with the first connecting part and the second connecting part. The first holding part is embedded in the mounting seat, the first connecting part and the second connecting part are both supported on the mounting seat, the first connecting part aimed at being connected with the first connecting piece through a locking member, and the second connecting part aimed at being connected with the second connecting piece through the locking member; the
connector further includes:
a first connecting nut, fixed to the first connecting part of the connecting terminal; and a second connecting nut, fixed to the second connecting part of the connecting terminal; the first connecting nut aimed at being matched with a corresponding locking member being a bolt so as to connect the first connecting part and the first connecting piece, and the second connecting nut aimed at being matched with a corresponding locking member being a bolt so as to connect the second connecting part and the second connecting piece.

The second connecting part and the first connecting part are on the same side of the first holding part in the width direction.

The connecting terminal further includes: a second holding part, extending along the height direction and is arranged opposite to the first holding part along the width direction. The second holding part is embedded in the mounting seat, and at least one of the first connecting part and the second connecting part is connected to the second holding part.

The number of the second holding part is one, and the one second holding part is connected to the first connecting part or the second connecting part. Or the number of the second holding part is two, and the two second holding parts are arranged to be spaced apart along the height direction, where one second holding part is connected to the first connecting part, and the other second holding part is connected to the second connecting part.

The number of the second holding part is one, and the one second holding part is connected to the first connecting part and the second connecting part simultaneously.

A part of the first holding part is formed into a first arch structure; and/or a part of the second holding part is formed into a second arch structure.

The part of the first holding part is formed into the first arch structure, and the part of the second holding part is formed into the second arch structure. The first arch structure and the second arch structure protrude in opposite directions.

The second connecting part and the first connecting part are on both sides of the first holding part in the width direction.

The present invention provides a battery product, including a box and the above-described connector. The mounting seat of the connector is fixed to the box, the first connecting part of the connecting terminal is arranged outside the box, and the second connecting part is arranged inside the box.

The beneficial effects of the present invention are as follows: when the first connecting part and the second connecting part of the connecting terminal are subjected to an external load, since the first connecting part and the second connecting part of the connecting terminal are both directly supported on the mounting seat, the mounting seat could bear the external load together with the first connecting part and the second connecting part, thereby enhancing the load resistance capacity of the first connecting part and the second connecting part, so that phenomena of bending, deformation or even fracture would not be easy to happen in the connecting terminal, improving the safety performance of the battery product.

### BRIEF DESCRIPTION OF DRAWINGS

FIG. 1 is a perspective view of a connector in the prior art;
FIG. 2 is a schematic view of mountation when the connector of FIG. 1 is used to in a battery product, where only the part of the connector inside a box is shown;
FIG. 3 is a schematic view of an electrical connection relationship when the connector of FIG. 1 is used in the battery product;
FIG. 4 is a perspective view of a battery product of the present invention;
FIG. 5 is an enlarged view of a circled part in FIG. 4;
FIG. 6 is a schematic view of the inside of the battery product in FIG. 4, where only the part of the connector inside the box is shown;
FIG. 7 is an exploded view of FIG. 5;
FIG. 8 is an assembly diagram of FIG. 7;
FIG. 9 is a schematic view of an electrical connection relationship in FIG. 8;
FIG. 10 is a perspective view of a connector of the present invention as viewed from one view angle;
FIG. 11 is a perspective view of a connector of the present invention viewed from another view angle;
FIG. 12 is a schematic view of the inside of a connector of the present invention;
FIG. 13 is a perspective view of the connector in FIG. 10 with a mounting seat being removed;
FIG. 14 is a variant example of FIG. 13;
FIG. 15 is another variant example of FIG. 13;
FIG. 16 is still another variant example of FIG. 13; and
FIG. 17 is yet another variant example of FIG. 13.

Where the descriptions of the reference numerals are as follows:

| | | | |
|---|---|---|---|
| 1 - | connector | 1241 - | second opening |
| 11 - | mounting seat | 1242 - | second protrusion |
| 111 - | first main body part | 13 - | first connecting nut |
| 112 - | second main body part | 14 - | second connecting nut |
| 113 - | extension part | 2 - | first connecting piece |
| 114 - | mounting part | 3 - | second connecting piece |
| 12 - | connecting terminal | 4 - | locking member |
| 121 - | first connecting part | 5 - | box |
| 122 - | second connecting part | 51 - | mounting plate |
| 123 - | first holding part | H - | height direction |
| 1231 - | first opening | W - | width direction |
| 1232 - | first protrusion | L - | length direction |
| 124 - | second holding part | | |

### DESCRIPTION OF EMBODIMENTS

In the following, a connector and a battery product according to the present invention will be described in detail with reference to the accompanying drawings.

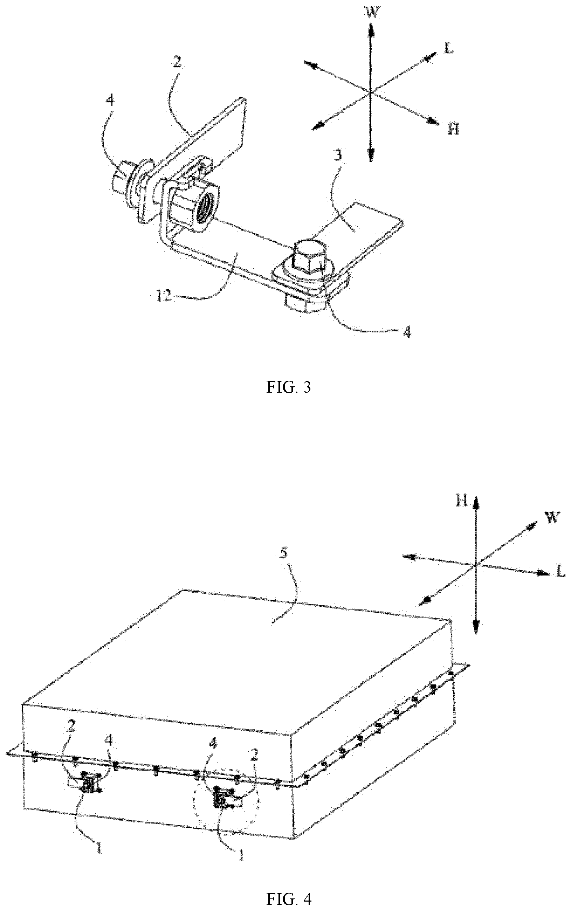

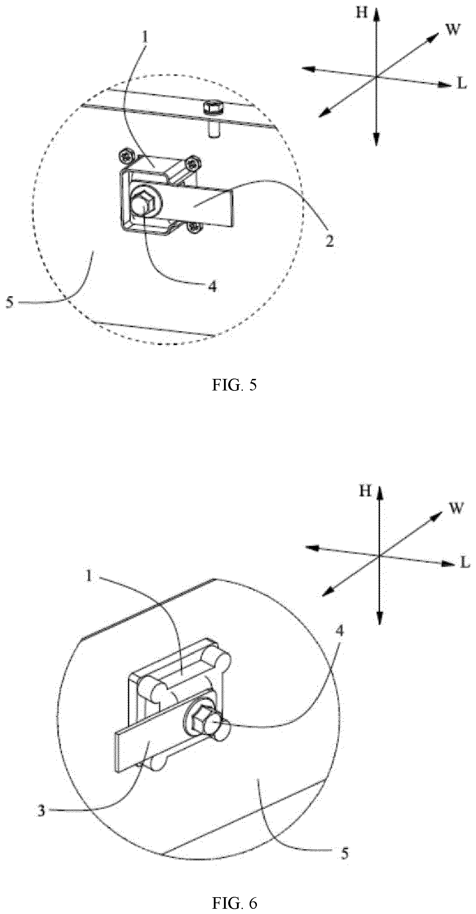

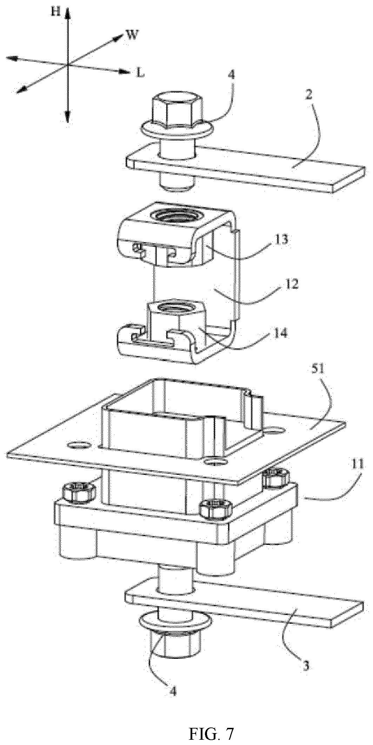

Referring to FIG. 4 to FIG. 7, the battery product according to the present invention includes a connector 1, a first connecting piece 2, a second connecting piece 3, locking members 4 and a box 5.

The box 5 includes a mounting plate 51. The mounting plate 51 is provided with a mounting hole. The connector 1 is fixedly mounted to the mounting plate 51 through the mounting hole. The first connecting piece 2 is arranged outside the box 5, and the second connecting piece 3 is arranged inside the box 5.

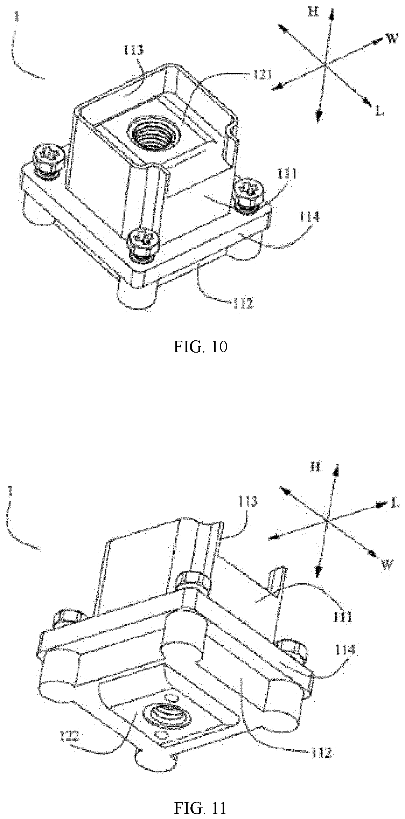

Referring to FIG. 4 to FIG. 17, the connector 1 includes a mounting seat 11, a connecting terminal 12, a first connecting nut 13 and a second connecting nut 14.

The mounting seat 11 is fixed to the mounting plate 51, the connecting terminal 12 is fixed to the mounting seat 11, and the mounting seat 11 may be shaped by injection molding on the connecting terminal 12. Where the mounting seat 11 may be made of an insulating material, such as plastic, ceramic, bakelite, etc. The connecting terminal 12 may be made of a metal material, such as copper, aluminum, etc.

The connecting terminal 12 of the connector 1 includes: a first connecting part 121 extending along a width direction W; a second connecting part 122 extending along the width direction W and arranged to be spaced apart from the first connecting part 121 along a height direction H; and a first holding part 123 extending along the height direction H and connected with the first connecting part 121 and the second connecting part 122. Where the first holding part 123 is embedded in the mounting seat 11, and the first connecting part 121 and the second connecting part 122 are both supported on the mounting seat 11.

The first connecting part 121 is connected with the first connecting piece 2 through a locking member 4 outside the box 5, and the second connecting part 122 is connected with the second connecting piece 3 through a locking member 4 inside the box 5, thereby realizing an electrical connection between the inside and outside of the battery product.

When the first connecting part 121 and the second connecting part 122 of the connecting terminal 12 are subjected to an external load, since the first connecting part 121 and the second connecting part 122 of the connecting terminal 12 are supported on the mounting seat 11, the mounting seat 11 may bear the external load together with the first connecting part 121 and the second connecting part 122, thereby enhancing the load resistance capacity of the first connecting part 121 and the second connecting part 122, so that phenomena of bending, deformation or even fracture would not be easy to happen in the connecting terminal 12, which improves the safety performance of the battery product.

Specifically, when the connecting terminal 12 is fixedly connected with the first connecting piece 2 and the second connecting piece 3 through the locking members 4, the mounting seat 11, together with the first connecting part 121 or the second connecting part 122, bears a torsion force exerted by a corresponding locking member 4, thereby enhancing a torque resistance capacity of the first connecting part 121 and the second connecting part 122, so that phenomena of bending, deformation or even fracture would not be easy to happen in the connecting terminal 12, which improves a connection strength between the connecting terminal 12 and the battery product.

When the battery product are under the working condition of vibration with large amplitude and high frequency, as well as under the working conditions of impact and extrusion, the mounting seat 11, together with the first connecting part 121 and the second connecting part 122, bears the external vibration, impact and extrusion, thereby enhancing anti-vibration, anti-shock and anti-extrusion capacities of the first connecting part 121 and the second connecting part 122, so that phenomena of bending, deformation or even fracture would not be easy to happen in the connecting terminal 12, which improves the safety performance of the battery product.

In addition, compared with the technologies involved in the background art, the way of configuration between the connecting terminal 12 and the mounting seat 11 of the connector 1 makes the second connecting part 122 of the connecting terminal 12 less exposed inside the box 5, which not only reduces the space occupied by the connecting terminal 12 inside the box 5, but also makes the second connecting part 122 not easy to contact with other electrically connected parts inside the box 5 during the use of the battery product, thereby improving the safety performance of the battery products.

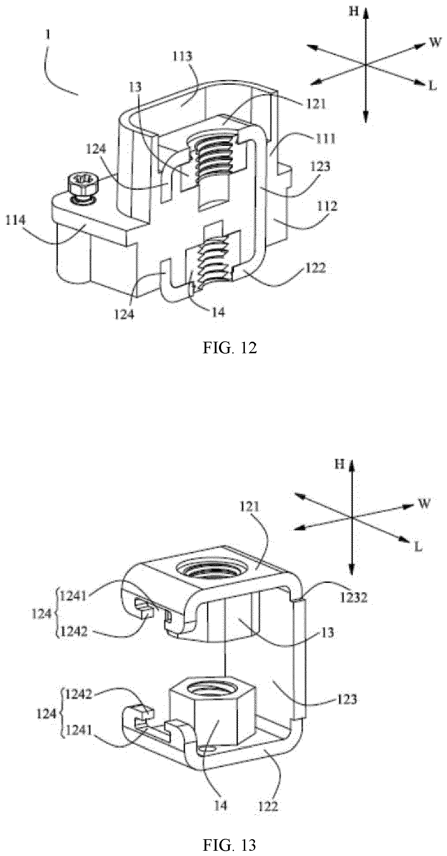

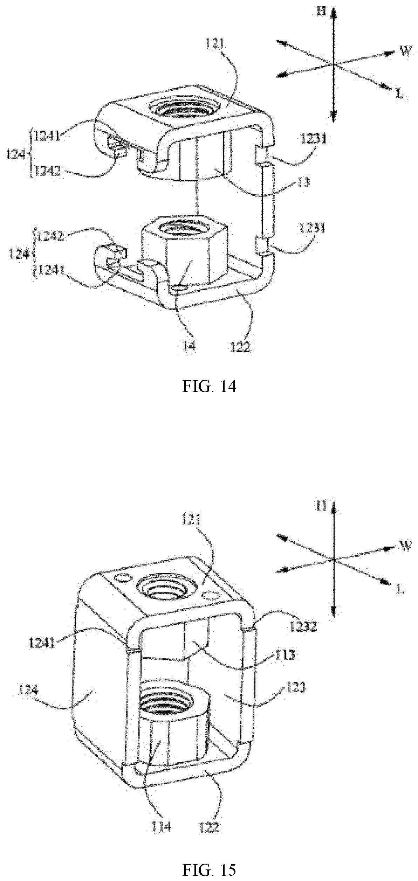

The first holding part 123 of the connecting terminal 12 may be provided with a first opening 1231 (as shown in FIG. 14) and/or a first protrusion 1232 (as shown in FIG. 13 and FIGS. 15 to 17). In the injection molding process of the mounting seat 11, a part of the injection molding material is filled into the first opening 1231 and/or covers the first protrusion 1232, there forming a structure similar to a reinforcing rib on the mounting seat 11, thereby improving the connection strength between the connecting terminal 12 and the mounting seat 11.

Referring to FIGS. 12 to 17, the second connecting part 122 and the first connecting part 121 may be located on the same side of the first holding part 123 in the width direction W, and at this time, the second connecting part 122, the first connecting part 121 and the first holding part 123 form a C-shaped structure. Of course, the second connecting part 122 and the first connecting part 121 may also be located on both sides of the first holding part 123 in the width direction W, and at this time, the second connecting part 122, the first connecting part 121 and the first holding part 123 form a Z-shaped structure.

The connecting terminal 12 may also be provided with a second holding part 124, which extends along the height direction H and is arranged opposite to the first holding part 123 along the width direction W. The second holding part 124 is embedded in the mounting seat 11, and at least one of the first connecting part 121 and the second connecting part 122 is connected to the second holding part 124. Herein, since the second holding part 124 and the first holding part 123 are embedded in the mounting seat 11 together, the connection strength between the connecting terminal 12 and the mounting seat 11 is enhanced. Therefore, during the use of the battery product, even if the first connecting piece 2 and/or the second connecting piece 3 pull the connecting terminal 12 under the action of an external force, the connecting terminal 12 is not easily detached from the mounting seat 11, thereby ensuring the tensile performance of the connector 1.

Referring to FIGS. 13 and 14, the second holding part 124 may be provided with a second opening 1241 and/or a second protrusion 1242. In the injection molding process of the mounting seat 11, a part of the injection molding material is filled into the second opening 1241 and/or covers the second protrusion 1242, thereby forming a structure similar to the reinforcing rib on the mounting seat 11, thereby improving the connection strength between the connecting terminal 12 and the mounting seat 11.

The ways of configuration of the second holding part 124 may be varied, and are described in detail below.

In an embodiment, the number of the second holding part 124 may be one, and the one second holding part 124 may be connected to the first connecting part 121 or the second connecting part 122.

In another embodiment, referring to FIG. 13 and FIG. 14, the number of the second holding part 124 may be two, and the two second holding parts 124 are arranged spaced apart along the height direction H, where one second holding part 124 is connected to the first connecting part 121, and the other second holding part 124 is connected to the second connecting part 122.

In still another embodiment, when the number of the second holding part 124 is one, the one second holding part 124 may also be connected to the first connecting part 121 and the second connecting part 122 simultaneously, and at this time, the first connecting part 121, the second connecting part 122, the second holding part 124, and the first holding part 123 form an O-shaped structure. The O-shaped structure improves a current carrying capacity of the connecting terminal 12.

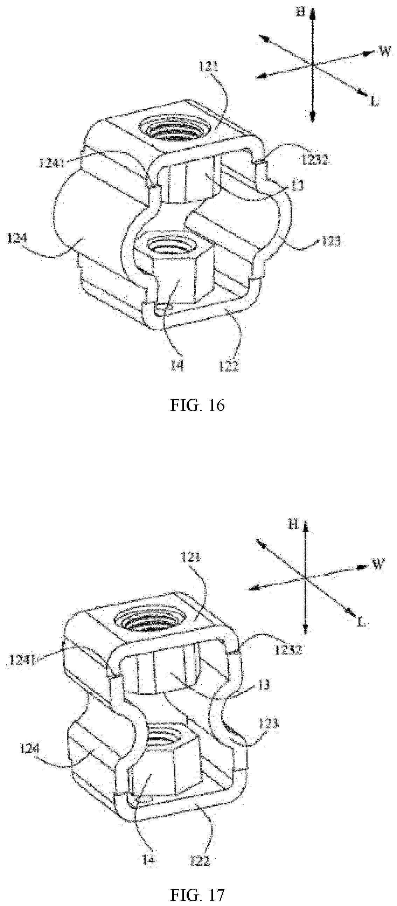

Referring to FIG. 15, the second holding part 124 and the first holding part 123 may be formed into a flat plate-shaped structure. In order to further improve the load resistance capacity of the connecting terminal 12, referring to FIGS. 16 and 17, a part of the first holding part 123 may be formed into a first arch structure; and/or a part of the second holding part 124 may be formed into a second arch structure.

Since surfaces of the first arch structure of the first holding part 123 and the second arch structure of the second holding part 124 are arc surfaces, when the first connecting part 121 and the second connecting part 122 of the connecting terminal 12 are subjected to an external load, the load on the connecting terminal 12 would be dispersedly transmitted to each part of the mounting seat 11, thus greatly improving the load resistance capacity of the connecting terminal 12.

Further referring to FIGS. 16 and 17, when a part of the first holding part 123 forms the first arch structure and a part of the second holding part 124 forms the second arch structure, the first arch structure and the second arch structure may protrude along opposite directions, that is, the first arch structure and the second arch structure are symmetrically distributed along the height direction H. At this time, when the first connecting part 121 and the second connecting part 122 of the connecting terminal 12 are subjected to an external load, loads dispersed in the width direction W through the first arch structure and the second arch structure would cancel each other, which is equivalent to that the connecting terminal 12 itself has the energy absorption and vibration absorption effects, thus greatly improving the load resistance capacity of the connecting terminal 12.

Referring to FIGS. 12 and 17, the first connecting nut 13 and the second connecting nut 14 may be arranged oppositely along the height direction H, where the first connecting nut 13 is fixedly connected to the first connecting part 121 of the connecting terminal 12, and the second connecting nut 14 is fixedly connected to the second connecting part 122 of the connecting terminal 12. In order to reduce the size of the connector 1, both the first connecting nut 13 and the second connecting nut 14 may be between the first connecting part 121 and the second connecting part 122 of the connecting terminal 12.

The first connecting nut 13 may be riveted to the first connecting part 121 of the connecting terminal 12, and the second connecting nut 14 may be riveted to the second connecting part 122 of the connecting terminal 12.

The locking members 4 may be connecting bolts. The first connecting nut 13 is matched with a corresponding locking member 4 so as to connect the first connecting part 121 and the first connecting piece 2, and the second connecting nut 14 is matched with a corresponding locking member 4 so as to connect the second connecting part 122 and the second connecting piece 3.

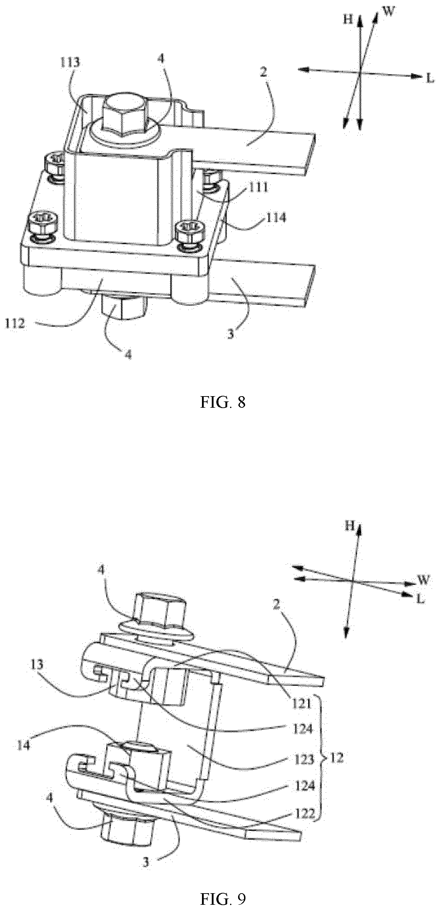

Referring to FIGS. 8 to 12, the mounting seat 11 may include a first main body part 111 extending along the height direction H; a second main body part 112 extending along the height direction H and arranged opposite to the first main body part 111; an extension part 113 extending along the height direction H and protruding from the first main body part 111, with the extension part 113 and the first main body part 111 forming a groove; and an mounting part 114 arranged between the first main body part 111 and the second main body part 112 in the height direction H.

The first holding part 123 of the connecting terminal 12 is embedded in the first main body part 111 and the second main body part 112, and the first connecting part 121 is supported on the first main body part 111 and is in the groove together with the first connecting piece 2, and the second connecting part 122 is supported on the second main body part 112. Herein, the arrangement of the groove helps to avoid external conductive parts interfering with an electrical connection between the connecting terminal 12 of the connector 1 and the first connecting piece 2.

Referring to FIGS. 4 to 6, when the connector 1 is mounted to the box 5, the first main body part 111 of the mounting seat 11 extends out of the box 5 through the mounting hole of the mounting plate 51, and the mounting part 114 and the second main body part 112 are located inside the box 5. In order to facilitate a fixed connection between the mounting seat 11 and the mounting plate 51 of the box 5, a third connecting nut (not shown) may be embedded inside the mounting part 114, and the mounting part 114 is fixedly connected to the mounting plate 51 through the locking members 4.

## Claims

1. A connector (1) for a battery product, the battery product comprises a box (5), a first connecting piece (2) arranged outside the box (5), a second connecting piece (3) arranged inside the box (5) and locking members (4), the connector (1) comprises a mounting seat (11) and a connecting terminal (12) fixed to the mounting seat (11), **characterized in that**:
the connecting terminal (12) comprises: a first connecting part (121) extending along a width direction (W); a second connecting part (122) extending along the width direction (W) and arranged to be spaced apart from the first connecting part (121) along a height direction (H); and a first holding part (123) extending along the height direction (H) and connected with the first connecting part (121) and the second connecting part (122);
the first holding part (123) is embedded in the mounting seat (11), the first connecting part (121) and the second connecting part (122) are both supported on the mounting seat (11), and the first connecting part (121) aimed at being connected with the first connecting piece (2) through a locking member (4), and the second connecting part (122) aimed at being connected with the second connecting piece (3) through the locking member (4); the connector (1) further comprises:
a first connecting nut (13), fixed to the first connecting part (121) of the connecting terminal (12); and a second connecting nut (14), fixed to the second connecting part (122) of the connecting terminal (12);
the first connecting nut (13) aimed at being matched with a corresponding locking member (4) being a bolt so as to connect the first connecting part (121) and the first connecting piece (2), and the second connecting nut (14) aimed at being matched with a corresponding locking member (4) being a bolt so as to connect the second connecting part (122) and the second connecting piece (3).

2. The connector (1) according to claim 1, **characterized in that**, the second connecting part (122) and the first connecting part (121) are arranged on the same side of the first holding part (123) in the width direction (W).

3. The connector (1) according to claim 2, **characterized in that**,
the connecting terminal (12) further comprises: a second holding part (124) extending along the height direction (H) and arranged opposite to the first holding part (123) along the width direction (W);
the second holding part (124) is embedded in the mounting seat (11), and at least one of the first connecting part (121) and the second connecting part (122) is connected to the second holding part (124).

4. The connector (1) according to claim 3, **characterized in that**,
the number of the second holding part (124) is one, and the one second holding part (124) is connected to the first connecting part (121) or the second connecting part (122); or
the number of the second holding part (124) is two, and the two second holding parts (124) are arranged to be spaced apart along the height direction (H), where one second holding part (124) is connected to the first connecting part (121), and the other second holding part (124) is connected to the second connecting part (122).

5. The connector (1) according to claim 3, **characterized in that**, the number of the second holding part (124) is one, and the one second holding part (124) is connected to the first connecting part (121) and the second connecting part (122) simultaneously.

6. The connector (1) according to claim 5, **characterized in that**,
a part of the first holding part (123) is formed into a first arch structure; and/or
a part of the second holding part (124) is formed into a second arch structure.

7. The connector (1) according to claim 6, **characterized in that**,
the part of the first holding part (123) is formed into the first arch structure, and the part of the second holding part (124) is formed into the second arch structure;
the first arch structure and the second arch structure protrude in opposite directions.

8. The connector (1) according to claim 1, **characterized in that**, the second connecting part (122) and the first connecting part (121) are arranged on both sides of the first holding part (123) in the width direction (W).

9. A battery product, comprising a box (5), **characterized in that**, the battery product further comprises the connector (1) according to any one of claims 1-9, and the mounting seat (11) of the connector (1) is fixed to the box (5), and the first connecting part (121) of the connecting terminal (12) is arranged outside the box (5), and the second connecting part (122) is arranged inside the box (5).

## Patentansprüche

1. Verbinder (1) für ein Batterieprodukt, wobei das Batterieprodukt einen Kasten (5), ein außerhalb des Kastens (5) angeordnetes erstes Verbindungsstück (2), ein innerhalb des Kastens (5) angeordnetes zweites Verbindungsstück (3) und Verriegelungselemente (4) umfasst, wobei der Verbinder eine Befestigungsaufnahme (11) und eine an der Befestigungsaufnahme (11) befestigte Verbindungsklemme (12) umfasst, **dadurch gekennzeichnet, dass**:
die Verbindungsklemme (12) Folgendes umfasst: einen ersten Verbindungsteil (121), der sich entlang einer Breitenrichtung (W) erstreckt; einen zweiten Verbindungsteil (122), der sich entlang der Breitenrichtung (W) erstreckt und dazu angeordnet ist, entlang einer Höhenrichtung (H) von dem ersten Verbindungsteil (121) beabstandet zu sein; und einen ersten Halteteil (123), der sich entlang der Höhenrichtung (H) erstreckt und mit dem ersten Verbindungsteil (121) und dem zweiten Verbindungsteil (122) verbunden ist;
der erste Halteteil (123) in der Befestigungsaufnahme (11) eingebettet ist, der erste Verbindungsteil (121) und der zweite Verbindungsteil (122) beide auf der Befestigungsaufnahme (11) getragen werden und der erste Verbindungsteil (121) dazu vorgesehen ist, über ein Verriegelungselement (4) mit dem ersten Verbindungsstück (2) verbunden zu werden und der zweite Verbindungsteil (122) dazu vorgesehen ist, über das Verriegelungselement (4) mit dem zweiten Verbindungsstück (3) verbunden zu werden; wobei der Verbinder (1) ferner Folgendes umfasst:
eine erste Verbindungsmutter (13), die an dem ersten Verbindungsteil (121) der Verbindungsklemme (12) befestigt ist; und eine zweite Verbindungsmutter (14), die an dem zweiten Verbindungsteil (122) der Verbindungsklemme (12) befestigt ist;
die erste Verbindungsmutter (13) dazu vorgesehen ist, mit einem entsprechenden Verriegelungselement (4), bei dem es sich um eine Schraube handelt, zusammengepasst zu werden, um den ersten Verbindungsteil (121) und das erste Verbindungsstück (2) zu verbinden, und die zweite Verbindungsmutter (14) dazu vorgesehen ist, mit einem entsprechenden Verriegelungselement (4), bei dem es sich um eine Schraube handelt, zusammengepasst zu werden, um den zweiten Verbindungsteil (122) und das zweite Verbindungsstück (3) zu verbinden.

2. Verbinder (1) nach Anspruch 1, **dadurch gekennzeichnet, dass** der zweite Verbindungsteil (122) und der erste Verbindungsteil (121) in der Breitenrichtung (W) auf derselben Seite des ersten Halteteils (123) angeordnet sind.

3. Verbinder (1) nach Anspruch 2, **dadurch gekennzeichnet, dass**
die Verbindungsklemme (12) ferner Folgendes umfasst: einen zweiten Halteteil (124), der sich entlang der Höhenrichtung (H) erstreckt und entlang der Breitenrichtung (W) dem ersten Halteteil (123) gegenüber angeordnet ist;
der zweite Halteteil (124) in der Befestigungsaufnahme (11) eingebettet ist und der erste Verbindungsteil (121) und/oder der zweite Verbindungsteil (122) mit dem zweiten Halteteil (124) verbunden sind.

4. Verbinder (1) nach Anspruch 3, **dadurch gekennzeichnet, dass**
die Anzahl des zweiten Halteteils (124) eins ist und der eine zweite Halteteil (124) mit dem ersten Verbindungsteil (121) oder dem zweiten Verbindungsteil (122) verbunden ist; oder
die Anzahl des zweiten Halteteils (124) zwei ist und die zwei zweiten Halteteile (124) dazu angeordnet sind, entlang der Höhenrichtung (H) voneinander beabstandet zu sein, wobei ein zweiter Halteteil (124) mit dem ersten Verbindungsteil (121) verbunden ist und der andere zweite Halteteil (124) mit dem zweiten Verbindungsteil (122) verbunden ist.

5. Verbinder (1) nach Anspruch 3, **dadurch gekennzeichnet, dass** die Anzahl des zweiten Halteteils (124) eins ist und der eine zweite Halteteil (124) gleichzeitig mit dem ersten Verbindungsteil (121) und dem zweiten Verbindungsteil (122) verbunden ist.

6. Verbinder (1) nach Anspruch 5, **dadurch gekennzeichnet, dass**
ein Teil des ersten Halteteils (123) zu einer ersten Bogenstruktur geformt ist; und/oder
ein Teil des zweiten Halteteils (124) zu einer zweiten Bogenstruktur geformt ist.

7. Verbinder (1) nach Anspruch 6, **dadurch gekennzeichnet, dass**
der Teil des ersten Halteteils (123) zu der ersten Bogenstruktur geformt ist und der Teil des zweiten Halteteils (124) zu der zweiten Bogenstruktur geformt ist;
die erste Bogenstruktur und die zweite Bogenstruktur in entgegengesetzte Richtungen ragen.

8. Verbinder (1) nach Anspruch 1, **dadurch gekennzeichnet, dass** der zweite Verbindungsteil (122) und der erste Verbindungsteil (121) in der Breitenrichtung (W) auf beiden Seiten des ersten Halteteils (123) angeordnet sind.

9. Batterieprodukt, umfassend einen Kasten (5), **dadurch gekennzeichnet, dass** das Batterieprodukt ferner den Verbinder (1) nach einem der Ansprüche 1-9 umfasst und die Befestigungsaufnahme (11) des Verbinders (1) an dem Kasten (5) befestigt ist und der erste Verbindungsteil (121) der Verbindungsklemme (12) außerhalb des Kastens (5) angeordnet ist und der zweite Verbindungsteil (122) innerhalb des Kastens (5) angeordnet ist.

## Revendications

1. Raccord (1) pour un produit de batterie, le produit de batterie comporte un boîtier (5), une première pièce de raccordement (2) agencée à l'extérieur du boîtier (5), une deuxième pièce de raccordement (3) agencée à l'intérieur du boîtier (5) et des éléments de verrouillage (4), le raccord (1) comporte un siège de montage (11) et une borne de raccordement (12) fixée sur le siège de montage (11), **caractérisé en ce que** :
la borne de raccordement (12) comporte : une première partie de raccordement (121) s'étendant le long d'une direction allant dans le sens de la largeur (W) ; une deuxième partie de raccordement (122) s'étendant le long de la direction allant dans le sens de la largeur (W) et agencée pour être espacée par rapport à la première partie de raccordement (121) le long d'une direction allant dans le sens de la hauteur (H) ; et une première partie de retenue (123) s'étendant le long de la direction allant dans le sens de la hauteur (H) et raccordée à la première partie de raccordement (121) et à la deuxième partie de raccordement (122) ;
la première partie de retenue (123) est encastrée dans le siège de montage (11), la première partie de raccordement (121) et la deuxième partie de raccordement (122) sont toutes les deux supportées sur le siège de montage (11), et la première partie de raccordement (121) étant destinée à être raccordée avec la première pièce de raccordement (2) par un élément de verrouillage (4), et la deuxième partie de raccordement (122) étant destinée à être raccordée avec la deuxième pièce de raccordement (3) par l'élément de verrouillage (4) ; le raccord (1) comporte par ailleurs :
un premier écrou de raccordement (13), fixé sur la première partie de raccordement (121) de la borne de raccordement (12) ; et un deuxième écrou de raccordement (14), fixé sur la deuxième partie de raccordement (122) de la borne de raccordement (12) ;
le premier écrou de raccordement (13) étant destiné à correspondre à un élément de verrouillage correspondant (4) qui est un boulon de manière à raccorder la première partie de raccordement (121) et la première pièce de raccordement (2), et le deuxième écrou de raccordement (14) étant destiné à correspondre à un élément de verrouillage correspondant (4) qui est un boulon de manière à raccorder la deuxième partie de raccordement (122) et la deuxième pièce de raccordement (3).

2. Raccord (1) selon la revendication 1, **caractérisé en ce que** la deuxième partie de raccordement (122) et la première partie de raccordement (121) sont agencées sur le même côté de la première partie de retenue (123) dans la direction allant dans le sens de la largeur (W).

3. Raccord (1) selon la revendication 2, **caractérisé en ce que**,
la borne de raccordement (12) comporte par ailleurs : une deuxième partie de retenue (124) s'étendant le long de la direction allant dans le sens de la hauteur (H) et agencée à l'opposé de la première partie de retenue (123) le long de la direction allant dans le sens de la largeur (W) ;
la deuxième partie de retenue (124) est encastrée dans le siège de montage (11), et au moins l'une parmi la première partie de raccordement (121) et la deuxième partie de raccordement (122) est raccordée à la deuxième partie de retenue (124).

4. Raccord (1) selon la revendication 3, **caractérisé en ce que**,
le nombre de la deuxième partie de retenue (124) est de un, et ladite une deuxième partie de retenue (124) est raccordée à la première partie de raccordement (121) ou à la deuxième partie de raccordement (122) ; ou
le nombre de la deuxième partie de retenue (124) est de deux, et les deux deuxièmes parties de retenue (124) sont agencées pour être espacées le long de la direction allant dans le sens de la hauteur (H), où une deuxième partie de retenue (124) est raccordée à la première partie de raccordement (121), et ladite autre deuxième partie de retenue (124) est raccordée à la deuxième partie de raccordement (122).

5. Raccord (1) selon la revendication 3, **caractérisé en ce que**, le nombre de la deuxième partie de retenue (124) est de un, et ladite une deuxième partie de retenue (124) est raccordée à la première partie de raccordement (121) et à la deuxième partie de raccordement (122) de manière simultanée.

6. Raccord (1) selon la revendication 5, **caractérisé en ce que**,
une partie de la première partie de retenue (123) est formée en une première structure d'arche ; et/ou
une partie de la deuxième partie de retenue (124) est formée en une deuxième structure d'arche.

7. Raccord (1) selon la revendication 6, **caractérisé en ce que**,
la partie de la première partie de retenue (123) est formée en la première structure d'arche, et la partie de la deuxième partie de retenue (124) est formée en la deuxième structure d'arche ;
la première structure d'arche et la deuxième structure d'arche font saillie dans des directions opposées.

8. Raccord (1) selon la revendication 1, **caractérisé en ce que** la deuxième partie de raccordement (122) et la première partie de raccordement (121) sont agencées sur les deux côtés de la première partie de retenue (123) dans la direction allant dans le sens de la largeur (W).

9. Produit de batterie, comportant un boîtier (5), **caractérisé en ce que** le produit de batterie comporte par ailleurs le raccord (1) selon l'une quelconque des revendications 1 à 9, et le siège de montage (11) du raccord (1) est fixé sur le boîtier (5), et la première partie de raccordement (121) de la borne de raccordement (12) est agencée à l'extérieur du boîtier (5), et la deuxième partie de raccordement (122) est agencée à l'intérieur du boîtier (5).
